# EUROPEAN PATENT APPLICATION

(11) **EP 4 647 629 A1**
(43) Date of publication of application: **12.11.2025**
(21) Application number: 23940331.4
(22) Date of filing: 30.08.2023
(51) Int. Cl.: F16D 27/14

(54) **ELECTROMAGNETIC CLUTCH ASSEMBLY, ELECTROMAGNETIC CLUTCH, POWER DEVICE, AND VEHICLE**

(30) Priority: 09.06.2023 CN 202310688586; 09.06.2023 CN 202321481252 U
(71) Applicant: Guangzhou Automobile Group Co., Ltd., Guangzhou, Guangdong 511434 (CN)
(72) Inventor: LI, Jia, Guangzhou, Guangdong 511434 (CN); YU, Zilin, Guangzhou, Guangdong 511434 (CN); LING, Xiaoming, Guangzhou, Guangdong 511434 (CN); XIE, Xumiao, Guangzhou, Guangdong 511434 (CN); WANG, Zelun, Guangzhou, Guangdong 511434 (CN)
(74) Representative: Metida
(86) International application number: PCT/CN2023/115944
(87) International publication number: WO 2024/250452

(57) **Abstract**

An electromagnetic clutch assembly (100), an electromagnetic clutch, a power device, and a vehicle are provided. The electromagnetic clutch assembly (100) includes a main shaft (1), a sliding sleeve (2), an electromagnetic induction assembly, and a first transmission member (3) and a second transmission member (4) connected to the main shaft (1). The main shaft is provided with a connecting portion between the first transmission member (3) and the second transmission member (4). The sliding sleeve (2) and the electromagnetic induction assembly are sequentially arranged on a radial outer side of the connecting portion. The electromagnetic induction assembly is connected to the sliding sleeve (2) and can drive the sliding sleeve to move in an axial direction of the main shaft (1) via electromagnetic induction, so that the sliding sleeve (2) moves to a position where the sliding sleeve meshes with the first transmission member or the second transmission member, thereby enabling the electromagnetic clutch assembly (100) to have two power output gear positions. When the clutch assembly (100) is operated, more gear positions can be selected. Moreover, the vehicle can switch between a plurality of gear positions to output a wider range of speeds.

## Description

### FIELD OF TECHNOLOGY

The present invention relates to the field of vehicles, and mainly to an electromagnetic clutch assembly, an electromagnetic clutch, a power device, and a vehicle.

### BACKGROUND

In the power device of an automobile, a gear shifting device, namely a clutch, is typically provided for switching between gear positions. In an automatically controlled reduction gearbox, an electromagnetic clutch is typically used for automatic gear shifting. However, in existing clutches, each electromagnetic clutch can only achieve switching of a single gear position, that is, there are only a "neutral gear" position and a "first gear" position. When the electromagnetic clutch is in the "neutral gear" position, no power is output, so that the power device can only output power in one gear position. Moreover, the motor in the power device has a certain power range, that is, the motor can only operate within a certain speed range, which greatly limits the vehicle speed.

### SUMMARY

In view of the above deficiencies in the prior art, an objective of the present invention is to provide an electromagnetic clutch assembly with two power output gear positions, and an electromagnetic clutch, thereby reducing the limitation on the vehicle speed.

Another objective of the present invention is to provide a power device, including the electromagnetic clutch assembly. Two power output gear positions can be achieved, enabling the power device to output a wider range of rotational speeds.

Another objective of the present invention is to provide a vehicle, including the power device and capable of outputting a wider range of speeds.

To achieve the above objectives, the present invention adopts the following technical solutions:

An electromagnetic clutch assembly, including: a main shaft, where a connecting portion is arranged on a circumferential outer side of the main shaft; a sliding sleeve, slidably connected to a circumferential outer side of the connecting portion and movable in an axial direction of the main shaft; a first transmission member, rotatably connected to the main shaft and located on a first side of the connecting portion in the axial direction of the main shaft; a second transmission member, rotatably connected to the main shaft and located on a second side of the connecting portion in the axial direction of the main shaft; and an electromagnetic induction assembly, connected to the sliding sleeve and capable of driving the sliding sleeve to move via electromagnetic induction, thereby enabling the sliding sleeve to be engaged with the first transmission member or the second transmission member.

In some embodiments of the present application, the electromagnetic induction assembly includes an armature part, a first coil, and a second coil, where the armature part is arranged on a circumferential outer side of the sliding sleeve and connected to the sliding sleeve, the first coil and the second coil are both sleeved on a circumferential outer side of the armature part and are arranged in the axial direction of the main shaft, and the first coil is symmetrical to the second coil; and the first coil is configured to control the armature part to drive the sliding sleeve to be engaged with the first transmission member, and the second coil is configured to control the armature part to drive the sliding sleeve to be engaged with the second transmission member.

In some embodiments of the present application, the armature part includes a sliding ring made of a non-magnetic material and a thrust ring made of a magnetic material, where the sliding ring is connected to the sliding sleeve, and the thrust ring is arranged between the sliding ring and the coil.

In some embodiments of the present application, the thrust ring includes a first thrust ring and a second thrust ring, where the first thrust ring and the second thrust ring are arranged at an interval in the axial direction of the main shaft, the first coil and the first thrust ring are correspondingly arranged in a radial direction of the main shaft, and the second coil and the second thrust ring are correspondingly arranged in the radial direction of the main shaft.

In some embodiments of the present application, the electromagnetic induction assembly further includes a housing, a first cover plate, and a second cover plate, where the housing is sleeved on a circumferential outer side of the thrust ring, and a first end of the housing in the axial direction of the main shaft is located on an outer side of the first thrust ring, while a second end of the housing is located on an outer side of the second thrust ring; the first end of the housing is provided with a first mounting groove, the first coil is mounted in the first mounting groove, the second end of the housing is provided with a second mounting groove, and the second coil is mounted in the second mounting groove; a radial outer side of the first cover plate is fixedly connected to the first end of the housing and is in contact with the first coil, a radial inner side of the first cover plate is located at one end of the first thrust ring in the axial direction of the main shaft, and there is a distance between the first cover plate and the first thrust ring in the axial direction of the main shaft; and a radial outer side of the second cover plate is fixedly connected to the second end of the housing and is in contact with the second coil, a radial inner side of the second cover plate is located at the other end of the second thrust ring in the axial direction of the main shaft, and there is a distance between the first cover plate and the second thrust ring in the axial direction of the main shaft.

In some embodiments of the present application, the sliding ring includes a first sliding ring and a second sliding ring, where the first sliding ring and the second sliding ring are arranged at an interval in the axial direction of the main shaft, the first sliding ring is slidably arranged on a radial inner side of the first thrust ring, and the second sliding ring is slidably arranged on a radial inner side of the second thrust ring; the first sliding ring is provided with a first step and a second step, the first step protrudes from a circumferential outer surface of the first sliding ring, and the second step protrudes from a circumferential inner surface of the first sliding ring; the second sliding ring is provided with a third step and a fourth step, the third step protrudes from a circumferential outer surface of the second sliding ring, and the fourth step protrudes from a circumferential inner surface of the second sliding ring; one end of the sliding sleeve in the axial direction of the main shaft is provided with a first snap ring, the other end of the sliding sleeve is provided with a second snap ring, and both the first snap ring and the second snap ring protrude from a circumferential outer surface of the sliding sleeve; and the first step abuts against one end of the first thrust ring away from the second thrust ring, the third step abuts against one end of the second thrust ring away from the first thrust ring, both the second step and the fourth step are located between the first snap ring and the second snap ring, the second step abuts against the first snap ring, and the fourth step abuts against the second snap ring.

In some embodiments of the present application, a positioning plate is fixed to the housing and located between the first sliding ring and the second sliding ring; the electromagnetic induction assembly further includes a first elastic element and a second elastic element, where the first elastic element is elastically arranged between the second step and the positioning plate, and the second elastic element is elastically arranged between the fourth step and the positioning plate; and the first elastic element and the second elastic element are configured to drive the armature part to reset and to drive the sliding sleeve to move to a position where the sliding sleeve is not engaged with the first transmission member and the second transmission member.

In some embodiments of the present application, the positioning plate is provided with a positioning pin, a length direction of the positioning pin is set in the axial direction of the main shaft, two ends of the positioning pin both protrude from a surface of the positioning plate, the first elastic element is sleeved at a first end of the positioning pin, and the second elastic element is sleeved at a second end of the positioning pin.

In some embodiments of the present application, the first coil and the second coil, the first thrust ring and the second thrust ring, the first sliding ring and the second sliding ring, and the first elastic element and the second elastic element are all symmetrically arranged with respect to the positioning plate.

In some embodiments of the present application, the connecting portion is a toothed hub, and third clamping teeth are arranged on a circumferential outer surface of the toothed hub; splines are arranged on an inner wall surface of the sliding sleeve and fit with the third clamping teeth; and one side of the first transmission member facing the sliding sleeve is provided with first clamping teeth, one side of the second transmission member facing the sliding sleeve is provided with second clamping teeth, and the first clamping teeth and the second clamping teeth are capable of being engaged with the splines.

In some embodiments of the present application, an axial outer surface of the first transmission member is provided with a first protruding ring, and the first protruding ring is arranged on one side of the first clamping teeth facing away from the sliding sleeve and is configured to restrict the sliding sleeve from moving toward one side close to the first transmission member; and an axial outer surface of the second transmission member is provided with a second protruding ring, and the second protruding ring is arranged on one side of the second clamping teeth facing away from the sliding sleeve and is configured to restrict the sliding sleeve from moving toward one side close to the second transmission member.

An electromagnetic clutch, including: a connecting portion; a sliding sleeve, slidably connected to a circumferential outer side of the connecting portion; and an electromagnetic induction assembly, connected to the sliding sleeve and capable of driving the sliding sleeve to move via electromagnetic induction, where two sides of the sliding sleeve are each provided with a clamping structure, so that the sliding sleeve is capable of being connected to different transmission components.

In some embodiments of the present application, the electromagnetic induction assembly includes an armature part, a first coil, and a second coil, where the armature part is arranged on a circumferential outer side of the sliding sleeve and connected to the sliding sleeve, the first coil and the second coil are both sleeved on a circumferential outer side of the armature part and are arranged in an axial direction of the sliding sleeve, and the first coil is symmetrical to the second coil.

In some embodiments of the present application, the armature part includes a sliding ring made of a non-magnetic material and a thrust ring made of a magnetic material, where the sliding ring is connected to the sliding sleeve, and the thrust ring is arranged between the sliding ring and the coil.

In some embodiments of the present application, the thrust ring includes a first thrust ring and a second thrust ring, where the first thrust ring and the second thrust ring are arranged at an interval in the axial direction of the sliding sleeve, the first coil and the first thrust ring are correspondingly arranged in a radial direction of the sliding sleeve, and the second coil and the second thrust ring are correspondingly arranged in the radial direction of the sliding sleeve.

In some embodiments of the present application, the electromagnetic induction assembly further includes a housing, a first cover plate, and a second cover plate, where the housing is sleeved on a circumferential outer side of the thrust ring, and a first end of the housing in the axial direction of the sliding sleeve is located on an outer side of the first thrust ring, while a second end of the housing is located on an outer side of the second thrust ring; the first end of the housing is provided with a first mounting groove, the first coil is mounted in the first mounting groove, the second end of the housing is provided with a second mounting groove, and the second coil is mounted in the second mounting groove; a radial outer side of the first cover plate is fixedly connected to the first end of the housing and is in contact with the first coil, a radial inner side of the first cover plate is located at one end of the first thrust ring in the axial direction of the sliding sleeve, and there is a distance between the first cover plate and the first thrust ring in the axial direction of the sliding sleeve; and a radial outer side of the second cover plate is fixedly connected to the second end of the housing and is in contact with the second coil, a radial inner side of the second cover plate is located at the other end of the second thrust ring in the axial direction of the sliding sleeve, and there is a distance between the first cover plate and the second thrust ring in the axial direction of the sliding sleeve.

In some embodiments of the present application, the sliding ring includes a first sliding ring and a second sliding ring, where the first sliding ring and the second sliding ring are arranged at an interval in the axial direction of the sliding sleeve, the first sliding ring is slidably arranged on a radial inner side of the first thrust ring, and the second sliding ring is slidably arranged on a radial inner side of the second thrust ring; the first sliding ring is provided with a first step and a second step, the first step protrudes from a circumferential outer surface of the first sliding ring, and the second step protrudes from a circumferential inner surface of the first sliding ring; the second sliding ring is provided with a third step and a fourth step, the third step protrudes from a circumferential outer surface of the second sliding ring, and the fourth step protrudes from a circumferential inner surface of the second sliding ring; one end of the sliding sleeve in the axial direction of the sliding sleeve is provided with a first snap ring, the other end of the sliding sleeve is provided with a second snap ring, and both the first snap ring and the second snap ring protrude from a circumferential outer surface of the sliding sleeve; and the first step abuts against one end of the first thrust ring away from the second thrust ring, the third step abuts against one end of the second thrust ring away from the first thrust ring, both the second step and the fourth step are located between the first snap ring and the second snap ring, the second step abuts against the first snap ring, and the fourth step abuts against the second snap ring.

In some embodiments of the present application, a positioning plate is fixed to the housing and located between the first sliding ring and the second sliding ring; the electromagnetic induction assembly further includes a first elastic element and a second elastic element, where the first elastic element is elastically arranged between the second step and the positioning plate, and the second elastic element is elastically arranged between the fourth step and the positioning plate; and the first elastic element and the second elastic element are configured to drive the armature part to reset and to drive the sliding sleeve to move to a position where the sliding sleeve is not engaged with the transmission components.

In some embodiments of the present application, the positioning plate is provided with a positioning pin, a length direction of the positioning pin is set in the axial direction of the sliding sleeve, two ends of the positioning pin both protrude from a surface of the positioning plate, the first elastic element is sleeved at a first end of the positioning pin, and the second elastic element is sleeved at a second end of the positioning pin.

In some embodiments of the present application, the first coil and the second coil, the first thrust ring and the second thrust ring, the first sliding ring and the second sliding ring, and the first elastic element and the second elastic element are all symmetrically arranged with respect to the positioning plate.

In some embodiments of the present application, the clamping structure includes fourth clamping teeth arranged at a first axial end of the sliding sleeve and fifth clamping teeth arranged at a second axial end of the sliding sleeve.

A power device, including a first transmission shaft, a second transmission shaft, and the electromagnetic clutch assembly, where the first transmission shaft is in transmission connection with the first transmission member, and the second transmission shaft is in transmission connection with the second transmission member; and a transmission ratio between the first transmission shaft and the first transmission member is different from a transmission ratio between the second transmission shaft and the second transmission member.

A power device, including a first transmission shaft, a second transmission shaft, and the electromagnetic clutch, where under the drive of the electromagnetic induction assembly, the sliding sleeve is capable of being in transmission connection with the first transmission shaft via the clamping structures, or the sliding sleeve is capable of being in transmission connection with the second transmission shaft via the clamping structures, and a transmission ratio between the first transmission shaft and the sliding sleeve is different from a transmission ratio between the second transmission shaft and the sliding sleeve.

A vehicle, including a vehicle body, wheels, and the power device, where the power device is fixedly connected to the vehicle body, and the wheels are in transmission connection with the power device.

The beneficial effects are as follows: the electromagnetic clutch assembly in the present application includes a main shaft, a sliding sleeve, a first transmission member, a second transmission member, and an electromagnetic induction assembly. The first transmission member and the second transmission member are rotatably connected to the main shaft, and the main shaft is provided with a connecting portion between the first transmission member and the second transmission member. The sliding sleeve is slidably connected to a circumferential outer side of the connecting portion and is movable in an axial direction of the main shaft. The electromagnetic induction assembly is connected to the sliding sleeve and can drive the sliding sleeve to move in the axial direction of the main shaft via electromagnetic induction, so that the sliding sleeve is engaged with the first transmission member or the sliding sleeve is engaged with the second transmission member, thereby connecting the main shaft to the first transmission member and the second transmission member, and enabling the electromagnetic clutch assembly to have two power output gear positions. When the clutch assembly is operated, more gear positions can be selected.

The electromagnetic clutch in the present application includes a connecting portion, a sliding sleeve, and an electromagnetic induction assembly. The sliding sleeve is slidably connected to a circumferential outer side of the connecting portion. The electromagnetic induction assembly is connected to the sliding sleeve and can drive the sliding sleeve to move via electromagnetic induction. Two sides of the sliding sleeve are each provided with a clamping structure. The sliding sleeve can be connected to different transmission components via the clamping structures on the two sides thereof, so that the electromagnetic clutch has two power output gear positions, and more gear positions can be selected when the clutch is operated.

The power device in the present application includes a first transmission shaft, a second transmission shaft, and the electromagnetic clutch assembly. The first transmission shaft is in transmission connection with the first transmission member of the electromagnetic clutch assembly. The second transmission shaft is in transmission connection with the second transmission member of the electromagnetic clutch assembly. Moreover, a transmission ratio between the first transmission shaft and the first transmission member is different from a transmission ratio between the second transmission shaft and the second transmission member, so that when the electromagnetic clutch assembly switches to different gear positions, two rotational speed ranges are output, thereby reducing the limitation on the rotational speed.

Another power device in the present application includes a first transmission shaft, a second transmission shaft, and the electromagnetic clutch. The first transmission shaft is connected to the sliding sleeve of the electromagnetic clutch assembly, or the second transmission shaft is connected to the sliding sleeve of the electromagnetic clutch assembly. A transmission ratio between the first transmission shaft and the sliding sleeve is different from a transmission ratio between the second transmission shaft and the sliding sleeve, so that when the electromagnetic clutch switches to different gear positions, two rotational speed ranges are output, thereby reducing the limitation on the rotational speed.

The vehicle in this application includes a vehicle body, wheels, and the power device, where the power device is mounted on the vehicle body, and the wheels are in transmission connection with the power device. The power device can switch a plurality of gear positions to output a wider range of vehicle speeds.

### BRIEF DESCRIPTION OF THE DRAWINGS

FIG. 1 is a schematic diagram of a sectional structure of an electromagnetic clutch assembly in an embodiment of the present application;
FIG. 2 is a schematic diagram of a connecting structure among an excitation member, an armature part, reset elements, and a sliding sleeve in an embodiment of the present application;
FIG. 3 is a schematic partial enlarged view at A in FIG. 1;
FIG. 4 is a schematic structural diagram of a first transmission member in an embodiment of the present application;
FIG. 5 is a schematic structural diagram of a second transmission member in an embodiment of the present application; and
FIG. 6 is a schematic diagram of a sectional structure of an electromagnetic clutch in an embodiment of the present application.

Description of reference numerals for main components: 100-electromagnetic clutch assembly; 1-main shaft; 11-connecting portion; 2-sliding sleeve; 3-first transmission member; 31-first clamping tooth; 32-first protruding ring; 4-second transmission member; 41-second clamping tooth; 42-second protruding ring; 5-excitation member; 511-first coil; 512-second coil; 52-housing; 53-positioning plate; 54-positioning pin; 55-first cover plate; 56-second cover plate; 6-armature part; 61-sliding ring; 611-first sliding ring; 6111-first step; 6112-second step; 612-second sliding ring; 6121-third step; 6122-fourth step; 62-thrust ring; 621-first thrust ring; 622-second thrust ring; 7-reset element; 71-first elastic element; 72-second elastic element; 8-first snap ring; 9-second snap ring; 200-electromagnetic clutch; 24-fourth clamping tooth; and 25-fifth clamping tooth.

### DESCRIPTION OF THE EMBODIMENTS

The present invention provides an electromagnetic clutch assembly, an electromagnetic clutch, a power device, and a vehicle. In order to make the objective, technical solutions and effects of the present invention clearer and more definite, the present invention will be further described in detail below with reference to the accompanying drawings and embodiments. It should be understood that the specific embodiments described herein are only for explaining the present invention and are not intended to limit the scope of protection of the present invention.

In the description of the present invention, it is to be understood that the terms "upper", "lower", "inner", "outer", and the like indicate orientations or positional relationships based on the orientations or positional relationships shown in the accompanying drawings, merely for the convenience of describing the present invention and simplifying the description, rather than indicating or implying that the device or element referred to must have a particular orientation or be constructed and operated in a particular orientation, and therefore cannot be understood as limitations to the present invention.

In the description of the present invention, it is to be noted that the terms "mount", "connected", and "connection" should be understood in a broad sense, unless otherwise expressly specified and limited. For example, it may be a fixed connection, a detachable connection, or an integral connection; it may be a mechanical connection, an electrical connection, or a mutual communication; and it may be being directly connected, being indirectly connected via an intermediate medium, a communication between the interiors of two elements, or an interaction between two elements. Those of ordinary skill in the art can understand specific meanings of the above terms in the present invention according to specific circumstances.

A vehicle includes a vehicle body, wheels, and a power device, where the power device is fixed to the vehicle body, and the wheels are in transmission connection with an output end of the power device. The wheels are driven to rotate by the power device, enabling the vehicle to move.

### Embodiment 1:

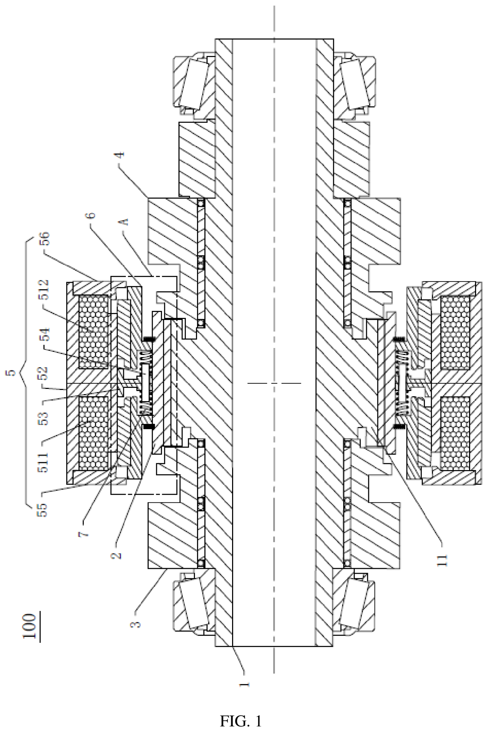

Referring to FIG. 1, the power device includes a first transmission shaft, a second transmission shaft, and an electromagnetic clutch assembly 100. The electromagnetic clutch assembly 100 includes a main shaft 1, a sliding sleeve 2, a first transmission member 3, a second transmission member 4, and an electromagnetic induction assembly. The first transmission shaft is in transmission connection with the first transmission member 3. The second transmission shaft is in transmission connection with the second transmission member 4. The electromagnetic induction assembly can drive the sliding sleeve 2 to move in an axial direction of the main shaft 1, so that the sliding sleeve 2 is connected to the first transmission member 3 or to the second transmission member 4. The transmission ratio between the first transmission shaft and the first transmission member 3 is different from the transmission ratio between the second transmission shaft and the second transmission member 4, so that the power device can output two different vehicle speeds, thereby increasing a rotational speed range at the output end of the power device, namely, enabling the vehicle to output a wider range of speeds.

For example, when the main shaft 1 of the electromagnetic clutch assembly 100 serves as a power input shaft (i.e., the main shaft 1 is connected to a driving mechanism), the first transmission shaft and the second transmission shaft are two output shafts of the power device. By controlling the electromagnetic clutch assembly 100, power on the main shaft 1 is transmitted to the first transmission shaft via the first transmission member 3, or power on the main shaft 1 is transmitted to the second transmission shaft via the second transmission member 4, thereby achieving power output. Since the transmission ratio between the first transmission shaft and the first transmission member 3 is different from the transmission ratio between the second transmission shaft and the second transmission member 4, the rotational speeds of the first transmission shaft and the second transmission shaft are different.

For example, when the main shaft 1 of the electromagnetic clutch assembly 100 serves as a power output shaft, the first transmission shaft and the second transmission shaft are two input shafts of the power device. By controlling the electromagnetic clutch assembly 100, power on the first transmission shaft is transmitted to the main shaft 1 via the first transmission member 3, or power on the second transmission shaft is transmitted to the main shaft 1 via the second transmission member 4. Since the transmission ratio between the first transmission shaft and the first transmission member 3 is different from the transmission ratio between the second transmission shaft and the second transmission member 4, when the rotational speeds of the first transmission shaft and the second transmission shaft are the same (the first transmission shaft and the second transmission shaft may be connected to two driving mechanisms respectively, or may be connected to the same driving mechanism), the output rotational speeds are different in the case where the main shaft 1 is in transmission connection with the first transmission shaft and the second transmission shaft.

The driving mechanism may include one or more of a motor or an engine. That is, the electromagnetic clutch assembly 100 can be applied to hybrid power devices, pure electric power devices, and engine-driven power devices. Further, the vehicle may be a hybrid vehicle, a pure electric vehicle, or a fuel vehicle.

For example, the rotational speed at the output end when the main shaft 1 and the first transmission shaft form a power transmission path is lower than the rotational speed at the output end when the main shaft 1 and the second transmission shaft form a power transmission path. When the vehicle starts, the electromagnetic clutch assembly 100 is controlled to switch to a state where the main shaft 1 is connected to the first transmission member 3, thereby outputting a greater torque. That is, the vehicle has greater starting power. When the vehicle speed is greater than a preset speed threshold, the electromagnetic clutch assembly 100 is controlled to switch to a state where the main shaft 1 is connected to the second transmission member 4, thereby outputting a higher rotational speed. That is, the vehicle has a higher speed.

Referring to FIG. 1, detailedly, in the electromagnetic clutch assembly 100, a connecting portion 11 is arranged on a circumferential outer side of the main shaft 1. The first transmission member 3 is rotatably connected to the main shaft 1 and is located on a first side of the connecting portion 11 in the axial direction of the main shaft 1. The second transmission member 4 is rotatably connected to the main shaft 1 and is located on a second side of the connecting portion 11 in the axial direction of the main shaft 1. That is, the first transmission member 3, the connecting portion 11, and the second transmission member 4 are sequentially arranged in the axial direction of the main shaft 1. The connecting portion 11 may be a gear, which is fixedly connected to the main shaft 1. Third clamping teeth (i.e., gear teeth of the gear) are arranged on a circumferential outer surface of the gear, or third clamping teeth may be directly machined on the circumferential outer side of the main shaft 1. A groove capable of fitting with a spline is formed between two adjacent third clamping teeth on the connecting portion 11.

Referring to FIG. 1, FIG. 4, and FIG. 5, the sliding sleeve 2 is slidably connected to a circumferential outer side of the connecting portion 11 and is located between the first transmission member 3 and the second transmission member 4. The sliding sleeve 2 is movable in the axial direction of the main shaft 1, that is, the sliding sleeve 2 is arranged coaxially with the main shaft 1. First clamping teeth 31 are arranged on one side of the first transmission member 3 facing the sliding sleeve 2. The first clamping teeth 31 can be engaged with the sliding sleeve 2. When the first clamping teeth 31 are engaged with the sliding sleeve 2, power is transmitted between the first transmission member 3 and the main shaft 1, that is, a power transmission path is formed between the first transmission member 3 and the main shaft 1. Similarly, second clamping teeth 41 are arranged on one side of the second transmission member 4 facing the sliding sleeve 2. The second clamping teeth 41 can be engaged with the sliding sleeve 2. When the second clamping teeth 41 are engaged with the sliding sleeve 2, power is transmitted between the second transmission member 4 and the main shaft 1, that is, a power transmission path is formed between the second transmission member 4 and the main shaft 1.

Specifically, splines are arranged on an inner wall surface of the sliding sleeve 2 and fit with the connecting portion 11. That is, the spline is in a structure protruding from the inner wall surface of the sliding sleeve 2 and is located in the groove between the two adjacent third clamping teeth of the connecting portion 11. The splines are slidable in the grooves, so that the sliding sleeve 2 can move toward the first transmission member 3 to achieve engagement between the first transmission member 3 and the sliding sleeve 2, and the sliding sleeve 2 can also move toward the second transmission member 4 to achieve engagement between the second transmission member 4 and the sliding sleeve 2.

In some embodiments of the present application, both the first clamping teeth 31 and the second clamping teeth 41 can be engaged with the splines. Therefore, during the movement of the sliding sleeve 2, the engagement between the splines and the first clamping teeth 31, and the engagement between the splines and the second clamping teeth 41 enable the engagement between the first transmission member 3 and the sliding sleeve 2, and the engagement between the second transmission member 4 and the sliding sleeve 2. That is, the first clamping teeth 31, the second clamping teeth 41, and the third clamping teeth can all fit with the splines, making the sliding sleeve 2 simpler in structure and convenient to manufacture.

In other embodiments, two axial end surfaces of the sliding sleeve 2 are each provided with clamping grooves capable of being engaged with the first clamping teeth 31 and the second clamping teeth 41. The sliding sleeve 2 is engaged with the first clamping teeth 31 via the clamping grooves facing the first transmission member 3, and the sliding sleeve 2 is engaged with the second clamping teeth 41 via the clamping grooves facing the second transmission member 4.

Referring to FIG. 1 to FIG. 3, the electromagnetic induction assembly includes an armature part 6, a first coil 511, and a second coil 512. The armature part 6 is arranged on a circumferential outer side of the sliding sleeve 2. Both the first coil 511 and the second coil 512 are sleeved on a circumferential outer side of the armature part 6, and both the first coil 511 and the second coil 512 can generate electromagnetic induction with the armature part 6.

The armature part 6 is connected to the sliding sleeve 2, so that the sliding sleeve 2 is movable in the axial direction of the main shaft 1 together with the armature part 6, thereby driving the sliding sleeve 2 to be engaged with the first clamping teeth 31 or driving the sliding sleeve 2 to be engaged with the second clamping teeth 41. When the sliding sleeve 2 is engaged with the first clamping teeth 31, a "first gear" is formed. When the sliding sleeve 2 is engaged with the second clamping teeth 41, a "second gear" is formed. Therefore, by controlling a magnetic field generated by an excitation member 5, the sliding sleeve 2 can be driven to switch between the "first gear" and the "second gear".

In an embodiment, the electromagnetic induction assembly further includes reset elements 7. The reset elements 7 are connected to the armature part 6 and configured to drive the armature part 6 to reset and to drive the sliding sleeve 2 to move to a position where the sliding sleeve is not engaged with the first clamping teeth 31 and the second clamping teeth 41, namely, to drive the sliding sleeve 2 to move to a "neutral gear" position. Therefore, under the action of the excitation member 5, the armature part 6, and the reset elements 7, the sliding sleeve 2 can move among the "neutral gear" position, a "first gear" position, and a "second gear" position, and the "first gear" position and the "second gear" position where power can be output are formed. The length of the sliding sleeve 2 in the axial direction of the main shaft 1 is less than or equal to a distance between the first transmission member 3 and the second transmission member 4, so that the sliding sleeve 2 cannot be engaged with both the first transmission member 3 and the second transmission member 4.

In the electromagnetic clutch assembly 100 shown in FIG. 1, the positions of the first coil 511, the second coil 512, and the reset elements 7 are fixed. The main shaft 1 is rotatable relative to the excitation member 5, that is, the main shaft 1 is rotatable along the axis thereof. The sliding sleeve 2 rotates together with the main shaft 1, that is, the sliding sleeve 2 is rotatable relative to the first coil 511 and the second coil 512, and the first transmission member 3 and the second transmission member 4 are rotatable relative to the main shaft 1. The positions of the main shaft 1, the first transmission member 3, the connecting portion 11, and the second transmission member 4 in the axial direction of the main shaft 1 are fixed relative to the first coil 511, the second coil 512, and the reset elements 7. The armature part 6 and the reset elements 7 can drive the sliding sleeve 2 to move in the axial direction of the main shaft 1.

The working principle of the electromagnetic clutch assembly 100 is as follows: when the first coil 511 and the second coil 512 are in a de-energized state, the sliding sleeve 2 is pushed by the reset elements 7 to the "neutral gear" position and does not output power. When the first coil 511 is energized and the armature part 6 is attracted toward the first transmission member 3, the armature part 6 moves from the "neutral gear" position toward the first transmission member 3, and the sliding sleeve 2 follows the armature part 6 to move, so that the sliding sleeve 2 is in the "first gear" position, thereby achieving engagement between the sliding sleeve 2 and the first transmission member 3. When the second coil 512 is energized and the armature part 6 is attracted toward the second transmission member 4, the armature part 6 moves from the "neutral gear" position toward the second transmission member 4, and the sliding sleeve 2 follows the armature part 6 to move, so that the sliding sleeve 2 is in the "second gear" position, thereby achieving engagement between the sliding sleeve 2 and the second transmission member 4.

The first coil 511 and the second coil 512 are arranged in the axial direction of the main shaft 1, and the first coil 511 is symmetrical to the second coil 512. The first coil 511 is configured to control the armature part 6 to drive the sliding sleeve 2 to be engaged with the first clamping teeth 31, and the second coil 512 is configured to control the armature part 6 to drive the sliding sleeve 2 to be engaged with the second clamping teeth 41. That is, the first coil 511 is configured to drive the armature part 6 to move toward the first transmission member 3, and the second coil 512 is configured to drive the armature part 6 to move toward the second transmission member 4. When gear shifting is required, a current in the first coil 511 and a current in the second coil 512 are separately controlled to be on or off.

In other embodiments, the electromagnetic induction assembly may include a coil. By changing positive and negative polarity of the coil, that is, by changing the direction of a current in the coil, the direction of a magnetic field generated by the coil is changed, thereby changing the direction of attraction between the excitation member 5 and the armature part 6, and controlling the sliding sleeve 2 in the "first gear" position or the "second gear" position.

In some embodiments of the present application, the coil (including a first coil 511 and a second coil 512) is connected to a low-voltage direct-current power supply, such as a 6-24 V direct-current power supply. The direct-current power supply may be a low-voltage direct-current battery on the vehicle.

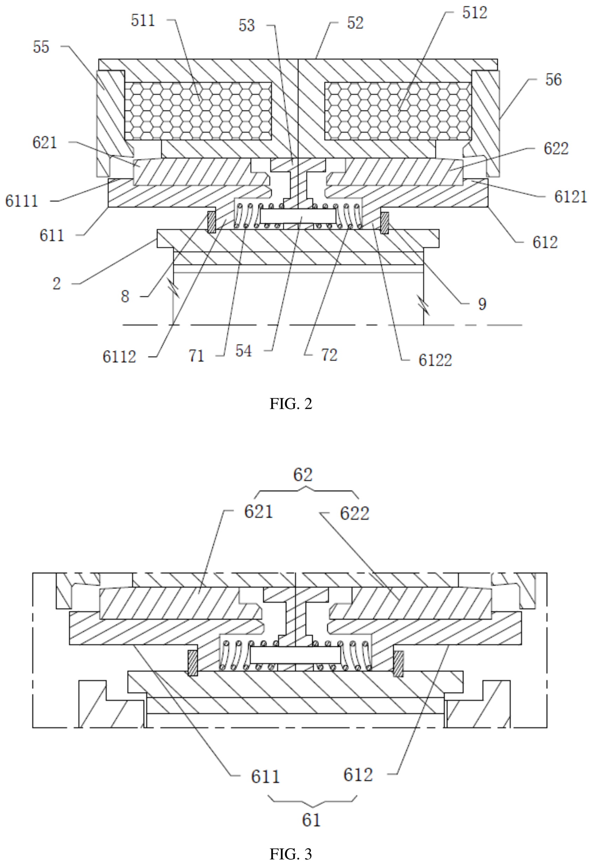

Referring to FIG. 2 and FIG. 3, the armature part 6 includes a sliding ring 61 made of a non-magnetic material and a thrust ring 62 made of a magnetic material, that is, the armature part 6 is divided into a magnetic thrust ring 62 and a non-magnetic sliding ring 61, which reduces a magnetic circuit area of the armature part 6. Since certain magnetic leakage occurs when a magnetic circuit of the magnetic field passes through a magnetic conductor, in the present application, the armature part 6 is divided into the thrust ring 62 and the sliding ring 61, and the sliding ring 61 is non-magnetic, thereby reducing magnetic circuits in a movable ring, and decreasing magnetic leakage. The sliding ring 61 is connected to the sliding sleeve 2, so that the sliding sleeve 2 moves together with the sliding ring 61. The thrust ring 62 is sleeved on an outer side of the sliding ring 61, so that the thrust ring 62 is closer to the excitation member 5, thereby providing a greater magnetic attraction force between the excitation member 5 and the thrust ring 62.

In the above, the non-magnetic material may be aluminum, ceramic, or resin, and the magnetic material may be steel, iron, etc.

The thrust ring 62 includes a first thrust ring 621 and a second thrust ring 622. The first thrust ring 621 and the second thrust ring 622 are arranged at an interval in the axial direction of the main shaft 1. The first coil 511 and the first thrust ring 621 are correspondingly arranged in a radial direction of the main shaft 1, and the second coil 512 and the second thrust ring 622 are correspondingly arranged in the radial direction of the main shaft 1. That is, a magnetic field generated by the first coil 511 is used to attract the first thrust ring 621, and a magnetic field generated by the second coil 512 is used to attract the second thrust ring 622. Therefore, the volume of the thrust ring 62 that needs to be attracted by the first coil 511 and the volume of the thrust ring 62 that needs to be attracted by the second coil 512 are reduced, further reducing magnetic leakage.

The electromagnetic induction assembly further includes a housing 52, a first cover plate 55, and a second cover plate 56. The housing 52 is sleeved on a circumferential outer side of the thrust ring 62, and the thrust ring 62 is slidably connected to the housing 52, that is, the thrust ring 62 is slidable relative to the housing 52 in the axial direction of the main shaft 1. A first end of the housing 52 in the axial direction of the main shaft 1 is located on an outer side of the first thrust ring 621, and a second end of the housing 52 is located on an outer side of the second thrust ring 622. The first end of the housing 52 is provided with a first mounting groove, the first coil 511 is mounted in the first mounting groove, the second end of the housing 52 is provided with a second mounting groove, and the second coil 512 is mounted in the second mounting groove. Therefore, in the radial direction of the main shaft 1, the position of the first coil 511 corresponds to the position of the first thrust ring 621; and in the radial direction of the main shaft 1, the position of the second coil 512 corresponds to the position of the second thrust ring 622.

A radial outer side of the first cover plate 55 is fixedly connected to the first end of the housing 52 in the axial direction of the main shaft 1 and is in contact with the first coil 511, a radial inner side of the first cover plate 55 is located at one end of the first thrust ring 621 in the axial direction of the main shaft 1, and there is a distance between the first cover plate 55 and the first thrust ring 621 in the axial direction of the main shaft 1. That is, when the sliding sleeve 2 is in the "neutral gear" position, there is a distance between the first cover plate 55 and the first thrust ring 621 in the axial direction of the main shaft 1, so that when the first coil 511 is energized, the generated magnetic field can attract the first thrust ring 621, and the first thrust ring 621 has a movement space to move to the "first gear" position.

Similarly, a radial outer side of the second cover plate 56 is fixedly connected to the second end of the housing 52 in the axial direction of the main shaft 1 and is in contact with the second coil 512, a radial inner side of the second cover plate 56 is located at the other end of the second thrust ring 622 in the axial direction of the main shaft 1, and there is a distance between the first cover plate 55 and the second thrust ring 622 in the axial direction of the main shaft 1. That is, when the sliding sleeve 2 is in the "neutral gear" position, there is a distance between the second cover plate 56 and the second thrust ring 622 in the axial direction of the main shaft 1, so that when the second coil 512 is energized, the generated magnetic field can attract the second thrust ring 622, and the second thrust ring 622 has a movement space to move to the "second gear" position.

In other words, the first coil 511, the second coil 512, the housing 52, the first cover plate 55, and the second cover plate 56 together form the excitation member 5. When the first coil 511 is energized, the armature part 6 is attracted to the first cover plate 55. When the second coil 512 is energized, the armature part 6 is attracted to the second cover plate 56. Moreover, both the first coil 511 and the second coil 512 are not energized.

In the present application, a first notch is formed in a position of the housing 52 close to a joint among the first mounting groove, the first cover plate 55, and the first thrust ring 621, so that the magnetic field generated by the first coil 511 cannot form a closed magnetic circuit. Therefore, the magnetic field generates a magnetic force that attracts the first thrust ring 621. After moving toward the first cover plate 55, the first thrust ring 621 is in contact with the first cover plate 55, so that a closed magnetic circuit is formed among the housing 52, the first cover plate 55, and the first thrust ring 621. Similarly, a second notch is formed in a position of the housing 52 close to a joint among the second mounting groove, the second cover plate 56, and the second thrust ring 622, so that the magnetic field generated by the second coil 512 cannot form a closed magnetic circuit. Therefore, the magnetic field generates a magnetic force that attracts the second thrust ring 622. After moving toward the second cover plate 56, the second thrust ring 622 is in contact with the second cover plate 56, so that a closed magnetic circuit is formed among the housing 52, the second cover plate 56, and the second thrust ring 622.

The sliding ring 61 includes a first sliding ring 611 and a second sliding ring 612. The first sliding ring 611 and the second sliding ring 612 are arranged at an interval in the axial direction of the main shaft 1. Moreover, the first sliding ring 611 is slidably arranged on a radial inner side of the first thrust ring 621, and the second sliding ring 612 is slidably arranged on a radial inner side of the second thrust ring 622. That is, the sliding ring 61 and the thrust ring 62 are arranged separately; moreover, the first sliding ring 611 corresponds to the first thrust ring 621, and the second sliding ring 612 corresponds to the second thrust ring 622. In other embodiments, the thrust ring 62 and the sliding ring 61 may also be fixed together to form a magnetic layer and a non-magnetic layer.

Based on the separate arrangement of the sliding ring 61 and the thrust ring 62, the first sliding ring 611 is provided with a first step 6111 and a second step 6112. The first step 6111 protrudes from a circumferential outer surface of the first sliding ring 611, and the second step 6112 protrudes from a circumferential inner surface of the first sliding ring 611. The second sliding ring 612 is provided with a third step 6121 and a fourth step 6122. The third step 6121 protrudes from a circumferential outer surface of the second sliding ring 612, and the fourth step 6122 protrudes from a circumferential inner surface of the second sliding ring 612. One end of the sliding sleeve 2 in the axial direction of the main shaft 1 is provided with a first snap ring 8, and the other end of the sliding sleeve is provided with a second snap ring 9. Both the first snap ring 8 and the second snap ring 9 protrude from a circumferential outer surface of the sliding sleeve 2.

The first step 6111 abuts against one end of the first thrust ring 621 away from the second thrust ring 622, so that when the first thrust ring 621 moves toward the first transmission member 3, the first step 6111 pushes the first sliding ring 611 to move. The third step 6121 abuts against one end of the second thrust ring 622 away from the first thrust ring 621, so that when the second thrust ring 622 moves toward the second transmission member 4, the third step 6121 pushes the second sliding ring 612 to move.

The second step 6112 and the fourth step 6122 are both located between the first snap ring 8 and the second snap ring 9. Moreover, the second step 6112 abuts against the first snap ring 8, and the fourth step 6122 abuts against the second snap ring 9. Therefore, when the first thrust ring 621 moves toward the first transmission member 3, the first thrust ring 621 drives the sliding sleeve 2 to move by means of the second step 6112 abutting against the first snap ring 8, while the second snap ring 9 drives the second thrust ring 622 to move via the fourth step 6122. When the second thrust ring 622 moves toward the second transmission member 4, the second thrust ring 622 drives the sliding sleeve 2 to move by means of the fourth step 6122 abutting against the second snap ring 9, while the second snap ring 9 drives the first thrust ring 621 to move via the second step 6112.

A positioning plate 53 is connected to the housing 52. The positioning plate 53 is configured to mount the reset elements 7. The positioning plate 53 is connected to an inner wall surface of the housing 52. The positioning plate 53 protrudes in a radial inner side of the housing 52. Moreover, the first sliding ring 611 and the first thrust ring 621 are located on one side of the positioning plate 53, and the second sliding ring 612 and the second thrust ring 622 are located on the other side of the positioning plate 53.

The reset element 7 includes a first elastic element 71 and a second elastic element 72. The first elastic element 71 and the second elastic element 72 may be springs or rubber blocks. The first elastic element 71 is elastically arranged between the second step 6112 and the positioning plate 53, and the second elastic element 72 is elastically arranged between the fourth step 6122 and the positioning plate 53. When the first coil 511 and the second coil 512 are in a power-off state, the first elastic element 71 pushes the sliding sleeve 2 to move in a direction close to the first transmission member 3 via the first sliding ring 611 and the first snap ring 8, and the second elastic element 72 pushes the sliding sleeve 2 to move in a direction close to the second transmission member 4 via the second sliding ring 612 and the second snap ring 9. When elastic forces of the first coil 511 and the second coil 512 are in a balanced state, the sliding sleeve 2 is located exactly between the first transmission member 3 and the second transmission member 4, and the sliding sleeve 2 is engaged with neither the first clamping teeth 31 nor the second clamping teeth 41, that is, the sliding sleeve 2 is in the "neutral gear" position.

In the above, when the first thrust ring 621 moves toward the first transmission member 3, the first thrust ring 621 drives the sliding sleeve 2 to move by means of the second step 6112 abutting against the first snap ring 8, while the second snap ring 9 drives the second thrust ring 622 to move via the fourth step 6122, so that the second elastic element 72 is compressed to store energy. When the second thrust ring 622 moves toward the second transmission member 4, the second thrust ring 622 drives the sliding sleeve 2 to move by means of the fourth step 6122 abutting against the second snap ring 9, while the second snap ring 9 drives the first thrust ring 621 to move via the second step 6112, so that the first elastic element 71 is compressed to store energy. Therefore, regardless of whether the sliding sleeve 2 is in the "first gear" position or the "second gear" position, the sliding sleeve 2 can be driven to reset to the "neutral gear" position in the case where the first coil 511 and the second coil 512 are de-energized.

The positioning plate 53 is provided with a positioning pin 54, a length direction of the positioning pin 54 is set in the axial direction of the main shaft 1, and two ends of the positioning pin 54 both protrude from a surface of the positioning plate 53. The first elastic element 71 is sleeved at a first end of the positioning pin 54, and the second elastic element 72 is sleeved at a second end of the positioning pin 54. Therefore, the positioning pin 54 serves to position both the first elastic element 71 and the second elastic element 72, so that elastic force directions of the first elastic element 71 and the second elastic element 72 are always maintained in the axial direction of the main shaft 1.

Since both the sliding sleeve 2 and the sliding ring 61 are annular, the positioning plate 53 is also made annular, and the plurality of reset elements 7 are circumferentially distributed on the positioning plate 53, making a thrust force of the reset elements 7 on the sliding sleeve 2 more uniform.

In the above, the first coil 511 and the second coil 512, the first thrust ring 621 and the second thrust ring 622, the first sliding ring 611 and the second sliding ring 612, and the first elastic element 71 and the second elastic element 72, are all symmetrically arranged with respect to the positioning plate 53, thereby making the structure more compact, facilitating control of elastic force balance between the first elastic element 71 and the second elastic element 72, and making it convenient to design the fit dimensions of the first thrust ring 621, the second thrust ring 622, the first sliding ring 611, and the second sliding ring 612. Moreover, each of the first thrust ring 621, the second thrust ring 622, the first sliding ring 611, and the second sliding ring 612 is simpler in structure and convenient to manufacture.

In the above, the excitation member 5 includes the first coil 511, the second coil 512, the housing 52, the first cover plate 55, and the second cover plate 56, and the armature part 6 includes the first thrust ring 621, the second thrust ring 622, the first sliding ring 611, and the second sliding ring 612 which are arranged separately. Therefore, during assembly of the excitation member 5, the armature part 6, and the sliding sleeve 2, first, the positioning plate 53 is press-mounted on the housing 52, and the positioning pin 54 is press-mounted on the positioning plate 53; then, the first coil 511, the first thrust ring 621, and the first cover plate 55 are mounted, and the second coil 512, the second thrust ring 622, and the second cover plate 56 are mounted; next, the first elastic element 71, the first sliding ring 611, the sliding sleeve 2, and the first snap ring 8 are mounted, and the second elastic element 72, the second sliding ring 612, and the second snap ring 9 are mounted. Since the sliding sleeve 2 is movable in the axial direction of the main shaft 1 and the first elastic element 71 and the second elastic element 72 can be compressed, when the second snap ring 9 (the one mounted later of the first snap ring 8 and the second snap ring 9) is mounted, both the first elastic element 71 and the second elastic element 72 are compressed, so that the sliding sleeve 2 extends the farthest toward a position where the second snap ring 9 is mounted, that is, a position on the sliding sleeve 2 for mounting the second snap ring 9 is located on or close to an outer side of the second sliding ring 612, thereby making it convenient to mount the second snap ring 9 on the sliding sleeve 2, and facilitating the assembly among the excitation member 5, the armature part 6, and the sliding sleeve 2.

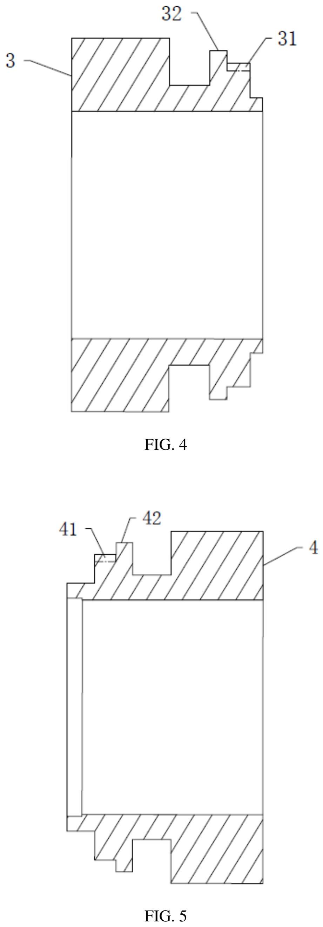

Referring to FIG. 4 and FIG. 5, an axial outer surface of the first transmission member 3 is provided with a first protruding ring 32. The first protruding ring 32 is arranged on one side of the first clamping teeth 31 facing away from the sliding sleeve 2. The first protruding ring 32 is configured to restrict the sliding sleeve 2 from moving toward one side close to the first transmission member 3. Similarly, an axial outer surface of the second transmission member 4 is provided with a second protruding ring 42. The second protruding ring 42 is arranged on one side of the second clamping teeth 41 facing away from the sliding sleeve 2. The second protruding ring 42 is configured to restrict the sliding sleeve 2 from moving toward one side close to the second transmission member 4.

By providing the first protruding ring 32 and the second protruding ring 42, a space for the sliding sleeve 2 to move in the axial direction of the main shaft 1 is formed between the first protruding ring 32 and the second protruding ring 42, and the sliding sleeve cannot move beyond the space, thereby preventing the smaller first thrust ring 621, second thrust ring 622, first sliding ring 611, second sliding ring 612, first snap ring 8, and second snap ring 9 from being damaged due to impact.

### Embodiment 2:

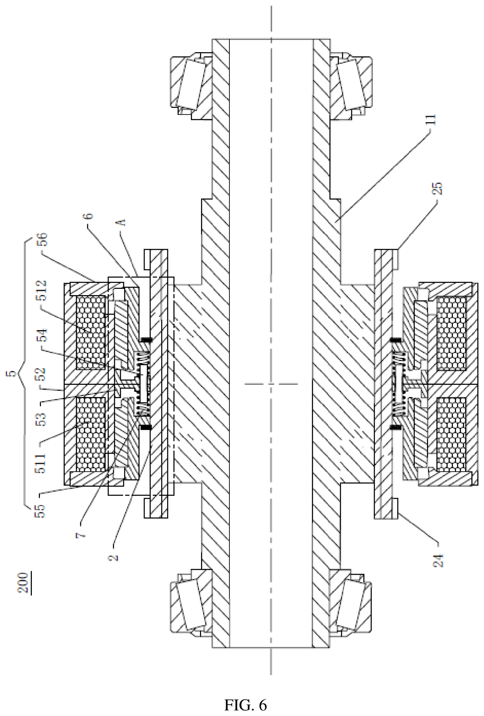

Referring to FIG. 6, the electromagnetic clutch 200 includes a connecting portion 11, a sliding sleeve 2, and an electromagnetic induction assembly. The sliding sleeve 2 is slidably connected to a circumferential outer side of the connecting portion 11. The electromagnetic induction assembly is connected to the sliding sleeve 2 and can drive the sliding sleeve 2 to move via electromagnetic induction. Two sides of the sliding sleeve 2 are each provided with a clamping structure, so that the sliding sleeve 2 can be connected to different transmission components.

The power device includes a first transmission shaft, a second transmission shaft, and the electromagnetic clutch 200. The first transmission shaft and the second transmission shaft are different transmission components that can be connected to the sliding sleeve 2. That is, the clamping structure includes fourth clamping teeth 24 arranged at a first axial end of the sliding sleeve 2 and fifth clamping teeth 25 arranged at a second axial end of the sliding sleeve 2. The sliding sleeve 2 can be connected to the first transmission shaft via the fourth clamping teeth 24. The sliding sleeve 2 can be connected to the second transmission shaft via the fifth clamping teeth 25. When the sliding sleeve 2 is connected to the first transmission shaft, the sliding sleeve 2 is not connected to the second transmission shaft. Similarly, when the sliding sleeve 2 is connected to the second transmission shaft, the sliding sleeve 2 is not connected to the first transmission shaft. Therefore, when the sliding sleeve 2 is connected to the first transmission shaft, power is transmitted between the connecting portion 11 and the first transmission shaft, thereby forming a "first gear"; and when the sliding sleeve 2 is connected to the second transmission shaft, power is transmitted between the connecting portion 11 and the second transmission shaft, thereby forming a "second gear". This enables the power device to output two different vehicle speeds, increasing a rotational speed range at the output end of the power device, namely, enabling the vehicle to output a wider range of speeds.

In the above, when the first transmission shaft or the second transmission shaft serves as a power input end, the connecting portion 11 serves as an output shaft for the sliding sleeve 2 to output power. When the first transmission shaft or the second transmission shaft serves as a power output end, the connecting portion 11 serves as an input shaft for the sliding sleeve 2 to input power.

In an embodiment, the fourth clamping teeth 24 and the fifth clamping teeth 25 may be gear teeth arranged on the sliding sleeve 2, that is, two sides of the sliding sleeve 2 are each provided with gear teeth, thereby forming two gear structures. In other words, the clamping structures on the two sides of the sliding sleeve 2 are two gears connected to the sliding sleeve 2. The fourth clamping teeth 24 are in meshing connection with the first transmission shaft, and the fifth clamping teeth 25 are in meshing connection with the second transmission shaft. A transmission ratio between the fourth clamping teeth 24 and the first transmission shaft is different from a transmission ratio between the fifth clamping teeth 25 and the second transmission shaft.

In other embodiments, the first transmission shaft is provided with sixth clamping teeth that fit with the fourth clamping teeth 24. When the fourth clamping teeth 24 are engaged with the sixth clamping teeth, a connection between the first transmission shaft and the sliding sleeve 2 is achieved. Similarly, the second transmission shaft is provided with seventh clamping teeth that fit with the fifth clamping teeth 25. When the fifth clamping teeth 25 are engaged with the seventh clamping teeth, a connection between the second transmission shaft and the sliding sleeve 2 is achieved. A transmission ratio of a power transmission path connected to the first transmission shaft is different from a transmission ratio of a power transmission path connected to the second transmission shaft. That is, the connection between the sliding sleeve 2 and the first transmission shaft, and the connection between the sliding sleeve 2 and the second transmission shaft are both the same as the connection between the first transmission member 3 and the sliding sleeve 2 in Embodiment 1.

The connecting portion 11 is a gear, a gear shaft, or a rotating shaft. The sliding sleeve 2 is provided with splines, and the sliding sleeve 2 is slidably connected to the connecting portion 11 via the splines, so that when the sliding sleeve 2 rotates, the connecting portion 11 can be driven to rotate, but when the sliding sleeve 2 moves, the sliding sleeve slides relative to the connecting portion 11, that is, the connecting portion 11 is rotatable but unmovable.

Referring to FIG. 6 and FIG. 1, specifically, compared with the electromagnetic clutch assembly 100 in Embodiment 1, the electromagnetic clutch 200 in Embodiment 2 is free of the main shaft 1, the first transmission member 3, and the second transmission member 4, and the structure of the electromagnetic induction assembly and the connection between the electromagnetic induction assembly and the sliding sleeve 2 are the same as those in Embodiment 1 and will not be repeated herein.

It can be understood that those of ordinary skill in the art can make equivalent substitutions or changes according to the technical solutions and inventive concept of the present invention, and all such changes or substitutions shall fall within the scope of protection of the present invention.

## Claims

1. An electromagnetic clutch assembly, **characterized by** comprising:
a main shaft, wherein a connecting portion is arranged on a circumferential outer side of the main shaft;
a sliding sleeve, slidably connected to a circumferential outer side of the connecting portion and movable in an axial direction of the main shaft;
a first transmission member, rotatably connected to the main shaft and located on a first side of the connecting portion in the axial direction of the main shaft;
a second transmission member, rotatably connected to the main shaft and located on a second side of the connecting portion in the axial direction of the main shaft; and
an electromagnetic induction assembly, connected to the sliding sleeve and capable of driving the sliding sleeve to move via electromagnetic induction, thereby enabling the sliding sleeve to be engaged with the first transmission member or the second transmission member.

2. The electromagnetic clutch assembly according to claim 1, **characterized in that** the electromagnetic induction assembly comprises an armature part, a first coil, and a second coil, wherein the armature part is arranged on a circumferential outer side of the sliding sleeve and connected to the sliding sleeve, the first coil and the second coil are both sleeved on a circumferential outer side of the armature part and are arranged in the axial direction of the main shaft, and the first coil is symmetrical to the second coil; and
the first coil is configured to control the armature part to drive the sliding sleeve to be engaged with the first transmission member, and the second coil is configured to control the armature part to drive the sliding sleeve to be engaged with the second transmission member.

3. The electromagnetic clutch assembly according to claim 2, **characterized in that** the armature part comprises a sliding ring made of a non-magnetic material and a thrust ring made of a magnetic material, wherein the sliding ring is connected to the sliding sleeve, and the thrust ring is arranged between the sliding ring and the coil.

4. The electromagnetic clutch assembly according to claim 3, **characterized in that** the thrust ring comprises a first thrust ring and a second thrust ring, wherein the first thrust ring and the second thrust ring are arranged at an interval in the axial direction of the main shaft, the first coil and the first thrust ring are correspondingly arranged in a radial direction of the main shaft, and the second coil and the second thrust ring are correspondingly arranged in the radial direction of the main shaft.

5. The electromagnetic clutch assembly according to claim 4, **characterized in that** the electromagnetic induction assembly further comprises a housing, a first cover plate, and a second cover plate, wherein the housing is sleeved on a circumferential outer side of the thrust ring, and a first end of the housing in the axial direction of the main shaft is located on an outer side of the first thrust ring, while a second end of the housing is located on an outer side of the second thrust ring;
the first end of the housing is provided with a first mounting groove, the first coil is mounted in the first mounting groove, the second end of the housing is provided with a second mounting groove, and the second coil is mounted in the second mounting groove;
a radial outer side of the first cover plate is fixedly connected to the first end of the housing and is in contact with the first coil, a radial inner side of the first cover plate is located at one end of the first thrust ring in the axial direction of the main shaft, and there is a distance between the first cover plate and the first thrust ring in the axial direction of the main shaft; and
a radial outer side of the second cover plate is fixedly connected to the second end of the housing and is in contact with the second coil, a radial inner side of the second cover plate is located at the other end of the second thrust ring in the axial direction of the main shaft, and there is a distance between the first cover plate and the second thrust ring in the axial direction of the main shaft.

6. The electromagnetic clutch assembly according to claim 5, **characterized in that**
the sliding ring comprises a first sliding ring and a second sliding ring, wherein the first sliding ring and the second sliding ring are arranged at an interval in the axial direction of the main shaft, the first sliding ring is slidably arranged on a radial inner side of the first thrust ring, and the second sliding ring is slidably arranged on a radial inner side of the second thrust ring;
the first sliding ring is provided with a first step and a second step, the first step protrudes from a circumferential outer surface of the first sliding ring, and the second step protrudes from a circumferential inner surface of the first sliding ring;
the second sliding ring is provided with a third step and a fourth step, the third step protrudes from a circumferential outer surface of the second sliding ring, and the fourth step protrudes from a circumferential inner surface of the second sliding ring;
one end of the sliding sleeve in the axial direction of the main shaft is provided with a first snap ring, the other end of the sliding sleeve is provided with a second snap ring, and both the first snap ring and the second snap ring protrude from a circumferential outer surface of the sliding sleeve; and
the first step abuts against one end of the first thrust ring away from the second thrust ring, the third step abuts against one end of the second thrust ring away from the first thrust ring, both the second step and the fourth step are located between the first snap ring and the second snap ring, the second step abuts against the first snap ring, and the fourth step abuts against the second snap ring.

7. The electromagnetic clutch assembly according to claim 6, **characterized in that**
a positioning plate is fixed to the housing and located between the first sliding ring and the second sliding ring;
the electromagnetic induction assembly further comprises a first elastic element and a second elastic element, wherein the first elastic element is elastically arranged between the second step and the positioning plate, and the second elastic element is elastically arranged between the fourth step and the positioning plate; and
the first elastic element and the second elastic element are configured to drive the armature part to reset and to drive the sliding sleeve to move to a position where the sliding sleeve is not engaged with the first transmission member and the second transmission member.

8. The electromagnetic clutch assembly according to claim 7, **characterized in that** the positioning plate is provided with a positioning pin, a length direction of the positioning pin is set in the axial direction of the main shaft, two ends of the positioning pin both protrude from a surface of the positioning plate, the first elastic element is sleeved at a first end of the positioning pin, and the second elastic element is sleeved at a second end of the positioning pin.

9. The electromagnetic clutch assembly according to claim 7, **characterized in that** the first coil and the second coil, the first thrust ring and the second thrust ring, the first sliding ring and the second sliding ring, and the first elastic element and the second elastic element are all symmetrically arranged with respect to the positioning plate.

10. The electromagnetic clutch assembly according to claim 1, **characterized in that**
the connecting portion is a toothed hub, and third clamping teeth are arranged on a circumferential outer surface of the toothed hub; splines are arranged on an inner wall surface of the sliding sleeve and fit with the third clamping teeth; and
one side of the first transmission member facing the sliding sleeve is provided with first clamping teeth, one side of the second transmission member facing the sliding sleeve is provided with second clamping teeth, and the first clamping teeth and the second clamping teeth are capable of being engaged with the splines.

11. The electromagnetic clutch assembly according to claim 10, **characterized in that** an axial outer surface of the first transmission member is provided with a first protruding ring, and the first protruding ring is arranged on one side of the first clamping teeth facing away from the sliding sleeve and is configured to restrict the sliding sleeve from moving toward one side close to the first transmission member; and
an axial outer surface of the second transmission member is provided with a second protruding ring, and the second protruding ring is arranged on one side of the second clamping teeth facing away from the sliding sleeve and is configured to restrict the sliding sleeve from moving toward one side close to the second transmission member.

12. An electromagnetic clutch, **characterized by** comprising:
a connecting portion;
a sliding sleeve, slidably connected to a circumferential outer side of the connecting portion; and
an electromagnetic induction assembly, connected to the sliding sleeve and capable of driving the sliding sleeve to move via electromagnetic induction,
wherein two sides of the sliding sleeve are each provided with a clamping structure, so that the sliding sleeve is capable of being connected to different transmission components.

13. The electromagnetic clutch according to claim 12, **characterized in that** the electromagnetic induction assembly comprises an armature part, a first coil, and a second coil, wherein the armature part is arranged on a circumferential outer side of the sliding sleeve and connected to the sliding sleeve, the first coil and the second coil are both sleeved on a circumferential outer side of the armature part and are arranged in an axial direction of the sliding sleeve, and the first coil is symmetrical to the second coil.

14. The electromagnetic clutch according to claim 13, **characterized in that** the armature part comprises a sliding ring made of a non-magnetic material and a thrust ring made of a magnetic material, wherein the sliding ring is connected to the sliding sleeve, and the thrust ring is arranged between the sliding ring and the coil.

15. The electromagnetic clutch according to claim 14, **characterized in that** the thrust ring comprises a first thrust ring and a second thrust ring, wherein the first thrust ring and the second thrust ring are arranged at an interval in the axial direction of the sliding sleeve, the first coil and the first thrust ring are correspondingly arranged in a radial direction of the sliding sleeve, and the second coil and the second thrust ring are correspondingly arranged in the radial direction of the sliding sleeve.

16. The electromagnetic clutch according to claim 15, **characterized in that** the electromagnetic induction assembly further comprises a housing, a first cover plate, and a second cover plate, wherein the housing is sleeved on a circumferential outer side of the thrust ring, and a first end of the housing in the axial direction of the sliding sleeve is located on an outer side of the first thrust ring, while a second end of the housing is located on an outer side of the second thrust ring;
the first end of the housing is provided with a first mounting groove, the first coil is mounted in the first mounting groove, the second end of the housing is provided with a second mounting groove, and the second coil is mounted in the second mounting groove;
a radial outer side of the first cover plate is fixedly connected to the first end of the housing and is in contact with the first coil, a radial inner side of the first cover plate is located at one end of the first thrust ring in the axial direction of the sliding sleeve, and there is a distance between the first cover plate and the first thrust ring in the axial direction of the sliding sleeve; and
a radial outer side of the second cover plate is fixedly connected to the second end of the housing and is in contact with the second coil, a radial inner side of the second cover plate is located at the other end of the second thrust ring in the axial direction of the sliding sleeve, and there is a distance between the first cover plate and the second thrust ring in the axial direction of the sliding sleeve.

17. The electromagnetic clutch according to claim 16, **characterized in that**
the sliding ring comprises a first sliding ring and a second sliding ring, wherein the first sliding ring and the second sliding ring are arranged at an interval in the axial direction of the sliding sleeve, the first sliding ring is slidably arranged on a radial inner side of the first thrust ring, and the second sliding ring is slidably arranged on a radial inner side of the second thrust ring;
the first sliding ring is provided with a first step and a second step, the first step protrudes from a circumferential outer surface of the first sliding ring, and the second step protrudes from a circumferential inner surface of the first sliding ring;
the second sliding ring is provided with a third step and a fourth step, the third step protrudes from a circumferential outer surface of the second sliding ring, and the fourth step protrudes from a circumferential inner surface of the second sliding ring;
one end of the sliding sleeve in the axial direction of the sliding sleeve is provided with a first snap ring, the other end of the sliding sleeve is provided with a second snap ring, and both the first snap ring and the second snap ring protrude from a circumferential outer surface of the sliding sleeve; and
the first step abuts against one end of the first thrust ring away from the second thrust ring, the third step abuts against one end of the second thrust ring away from the first thrust ring, both the second step and the fourth step are located between the first snap ring and the second snap ring, the second step abuts against the first snap ring, and the fourth step abuts against the second snap ring.

18. The electromagnetic clutch according to claim 17, **characterized in that**
a positioning plate is fixed to the housing and located between the first sliding ring and the second sliding ring;
the electromagnetic induction assembly further comprises a first elastic element and a second elastic element, wherein the first elastic element is elastically arranged between the second step and the positioning plate, and the second elastic element is elastically arranged between the fourth step and the positioning plate; and
the first elastic element and the second elastic element are configured to drive the armature part to reset and to drive the sliding sleeve to move to a position where the sliding sleeve is not engaged with the transmission components.

19. The electromagnetic clutch according to claim 18, **characterized in that** the positioning plate is provided with a positioning pin, a length direction of the positioning pin is set in the axial direction of the sliding sleeve, two ends of the positioning pin both protrude from a surface of the positioning plate, the first elastic element is sleeved at a first end of the positioning pin, and the second elastic element is sleeved at a second end of the positioning pin.

20. The electromagnetic clutch according to claim 18, **characterized in that** the first coil and the second coil, the first thrust ring and the second thrust ring, the first sliding ring and the second sliding ring, and the first elastic element and the second elastic element are all symmetrically arranged with respect to the positioning plate.

21. The electromagnetic clutch according to claim 12, **characterized in that** the clamping structure comprises fourth clamping teeth arranged at a first axial end of the sliding sleeve and fifth clamping teeth arranged at a second axial end of the sliding sleeve.

22. A power device, **characterized by** comprising a first transmission shaft, a second transmission shaft, and the electromagnetic clutch assembly according to any one of claims 1 to 11, wherein the first transmission shaft is in transmission connection with the first transmission member, and the second transmission shaft is in transmission connection with the second transmission member; and
a transmission ratio between the first transmission shaft and the first transmission member is different from a transmission ratio between the second transmission shaft and the second transmission member.

23. A power device, **characterized by** comprising a first transmission shaft, a second transmission shaft, and the electromagnetic clutch according to any one of claims 12 to 21, wherein under the drive of the electromagnetic induction assembly, the sliding sleeve is capable of being in transmission connection with the first transmission shaft via the clamping structures, or the sliding sleeve is capable of being in transmission connection with the second transmission shaft via the clamping structures, and a transmission ratio between the first transmission shaft and the sliding sleeve is different from a transmission ratio between the second transmission shaft and the sliding sleeve.

24. A vehicle, **characterized by** comprising a vehicle body, wheels, and the power device according to claim 22 or 23, wherein the power device is fixedly connected to the vehicle body, and the wheels are in transmission connection with the power device.
